(19) **Europäisches Patentamt**

**European Patent Office**

**Office européen des brevets**

(11) **EP 1 567 374 B1**

(12) **EUROPÄISCHE PATENTSCHRIFT**

(45) Veröffentlichungstag und Bekanntmachung des Hinweises auf die Patenterteilung:
**20.09.2006 Patentblatt 2006/38**

(21) Anmeldenummer: **03779843.6**

(22) Anmeldetag: **05.11.2003**

(51) Int Cl.:
**B60H 1/00** (2006.01)

(86) Internationale Anmeldenummer:
**PCT/EP2003/012302**

(87) Internationale Veröffentlichungsnummer:
**WO 2004/050398 (17.06.2004 Gazette 2004/25)**

(54) **VERFAHREN ZUR SONNENEINSTRAHLUNGSABHÄNGIGEN KLIMATISIERUNG DES FAHRZEUGINNENRAUMS**

METHOD FOR AIR-CONDITIONING A VEHICLE INTERIOR DEPENDENT ON INCIDENT SUNSHINE

PROCEDE DE CLIMATISATION DE L'HABITACLE D'UN VEHICULE, EN FONCTION DE L'ENSOLEILLEMENT

(84) Benannte Vertragsstaaten:
**FR GB IT SE**

(30) Priorität: **04.12.2002 DE 10256866**

(43) Veröffentlichungstag der Anmeldung:
**31.08.2005 Patentblatt 2005/35**

(73) Patentinhaber: **DaimlerChrysler AG**
**70567 Stuttgart (DE)**

(72) Erfinder: **RÖHM, Rolf**
**71131 Jettingen (DE)**

(56) Entgegenhaltungen:
**DE-A- 10 204 191       DE-A- 19 544 893**
**US-B1- 6 220 517**

EP 1 567 374 B1

**Beschreibung**

Die Erfindung betrifft ein Verfahren zur sonneneinstrahlungsabhängigen Klimatisierung eines Fahrzeuginnenraums nach dem Oberbegriff von Anspruch 1.

Aus der DE 40 24 431 A1 ist eine Klimaanlage mit einer Sonneneinstrahlungssensorik mit mehreren Sensorelementen bekannt. Dabei werden zunächst aus den einzelnen Sensorausgangssignalen die Intensität und die Richtung der Sonneneinstrahlung ermittelt, wonach diese beiden Größen zur Steuerung einer Klimaanlage sowie weiterer fahrzeugseitiger Aggregate dienen.

Auch bei einer aus der DE 43 05 446 A1 bekannten Schaltungsanordnung, die eine Sonneneinstrahlungssensorik mit mehreren Sensorelementen umfasst, wird zunächst aus einzelnen Sensorelementausgangssignalen die Intensität und die Richtung der Sonneneinstrahlung ermittelt, wonach diese beiden Größen zur Steuerung einer Klimaanlage sowie weiterer fahrzeugseitiger Aggregate dienen.

Ebenso offenbart die US 4 760 772 eine Klimaanlage mit einer Sonneneinstrahlungssensorik, die drei Sensorelemente aufweist, von denen eines dem Fahrzeugvorderbereich und die beiden anderen den dahinter liegenden beiden Fahrzeugseitenbereichen zugeordnet sind, oder vier Sensorelemente aufweist, von denen eines dem Fahrzeugvorderbereich, eines dem Fahrzeugrückbereich und die beiden anderen den zwei Fahrzeugseitenbereichen zugeordnet sind, wobei in jedem Fall mittels einer nachgeschalteten Rechnereinheit aus den Sensorelementausgangssignalen die Intensität und Richtung der Sonneneinstrahlung ermittelt wird, um mit diesen beiden berechneten Größen die Klimatisierungsleistung der Klimaanlage für verschiedene Fahrzeuginnenraumbereiche unterschiedlich einstellen zu können.

In der US 5 186 682 wird wie in der US 4 760 772 das Signal zweier seitlicher Sonneneinstrahlungssensoren von einer gemeinsamen Klimatisierungseinheit hinsichtlich Intensität und Einfallsrichtung des Sonnenlichts ausgewertet. Die einzige Klimatisierungsreglereinheit steuert dann die vorhandenen Klimatisierungskanäle in Abhängigkeit von der ermittelten Sonneneinstrahlungsintensität und -richtung an.

Schließlich ist aus der DE 195 44 893 C2 eine Klimaanlage zur sonneneinstrahlungsabhängigen Klimatisierung eines Fahrzeuginnenraums mit mindestens zwei in ihrer Klimatisierungsleistung einzeln steuerbaren Klimatisierungskanälen zur Klimatisierung unterschiedlicher Fahrzeuginnenraumbereiche und einer Sonneneinstrahlungssensorik mit mehreren Sensorelementen zur Erfassung der Sonneneinstrahlung in unterschiedlichen Raumwinkelbereichen. Jedem Klimatisierungskanal ist ein eigenes Sensorelement der Sonneneinstrahlungssensorik und eine eigene Klimatisierungsreglereinheit individuell zugeordnet. Das jeweils zugeordnete Sensorelement erfasst die Sonneneinstrahlung im wesentlichen beschränkt auf den denjenigen Raumwinkelbereich, der lagemäßig mit dem vor betreffenden Klimatisierungskanal klimatisierten Fahrzeuginnenraumbereich korrespondiert. Die jeweils zugeordnete Klimatisierungsreglereinheit stellt die Klimatisierungsleistung des betreffenden Klimatisierungskanals in Abhängigkeit vom Ausgangssignal nur des zugeordneten Sensorelements der Sonneneinstrahlungssensorik ein.

Somit ist mit letztgenanntem Stand der Technik eine individuelle sonneneinstrahlungsabhängige Klimatisierung verschiedener Bereiche eines Fahrzeuginnenraums möglich.

Jedoch liefert die Sonneneinstrahlungssensorik nur die Sonnenwerte der einzelnen Zonen und den Mittelwert daraus. Der Sonnenwert der einzelnen Zonen wird dabei direkt als Faktorkennlinie für die Temperatur- bzw. Gebläseregelung in Abhängigkeit von der Außentemperatur verwendet, d.h. die Blaslufttemperatur wird über den Sonneneinfluss abgesenkt bzw. der Gebläsepegel wird angehoben. Dabei wird nicht darauf geachtet, ob die Sonne steil oder flach zum Fahrzeug steht.

Wenn die Sonne sehr steil steht, haben alle Werte der Sensorelemente des Sonneneinstrahlungssensorik ungefähr denselben Wert. Je nach Stärke der Einstrahlung sind die Werte höher oder niedriger. Bei völliger Dunkelheit zeigen die Sensorwerte 0% an, während die Sensorwerte bei sehr starker Sonneneinstrahlung maximal 125% anzeigen. Bei sehr hoher Sonnenlast und sehr hoch stehender Sonne bedeutet dies für die Klimaregelung, dass, obwohl keine Sonneneinstrahlung auf die Fahrzeuginsassen wirkt, da die Sonneneinstrahlung auf das Fahrzeugdach und nicht durch eine Scheibe in den Innenraum erfolgt, in allen Zonen die Ausblastemperatur sehr stark abgesenkt wird bzw. der Gebläseanteil über die Sonneneinstrahlung sehr stark erhöht wird. Diese Klimaregelung ist jedoch fehlerhaft und für den/die Insassen sehr unkomfortabel.

Daher ist es Aufgabe der vorliegenden Erfindung, die gattungsgemäße Klimaanlage zur sonneneinstrahlungsabhängigen Klimatisierung eines Fahrzeuginnenraums und ein Verfahren zu deren Betrieb derart weiterzubilden, dass die vorstehend angeführte fehlerhafte und für den/die Insassen sehr unkomfortable Klimaregelung beseitigt wird.

Diese Aufgabe wird erfindungsgemäß durch ein Verfahren zur sonneneinstrahlungsabhängigen Klimatisierung eines Fahrzeuginnenraums mit den Merkmalen von Anspruch 1 gelöst. In den Unteransprüchen sind vorteilhafte Weiterbildungen der Erfindung angegeben.

Durch die Berechnung der Sonnensteilheit bzw. der seitenspezifischen Sonneneinstrahlung ist es möglich, im automatischen Gebläsebetrieb gezielter auf die von außen auf das Fahrzeug einwirkenden Einflussfaktoren/Störgrößen, wie z.B. Sonneneinstrahlung von einer Seite bzw. steile Sonne, zu reagieren und entgegenzuwirken. Die Insassen können durch einen manuellen Eingriff das Gebläse noch individueller auf ihre Bedürfnisse einstellen. Dadurch wird für die einzelnen Sitzpositionen eine deutliche Komfortverbesserung der Klimatisierung erreicht.

Diese und weitere Aufgaben, Merkmale und Vorteile der vorliegenden Erfindung werden aus der nachfolgenden Beschreibung eines bevorzugten Ausführungsbeispiels der Erfindung in Verbindung mit der Zeichnung offensichtlich.

Dabei zeigen:

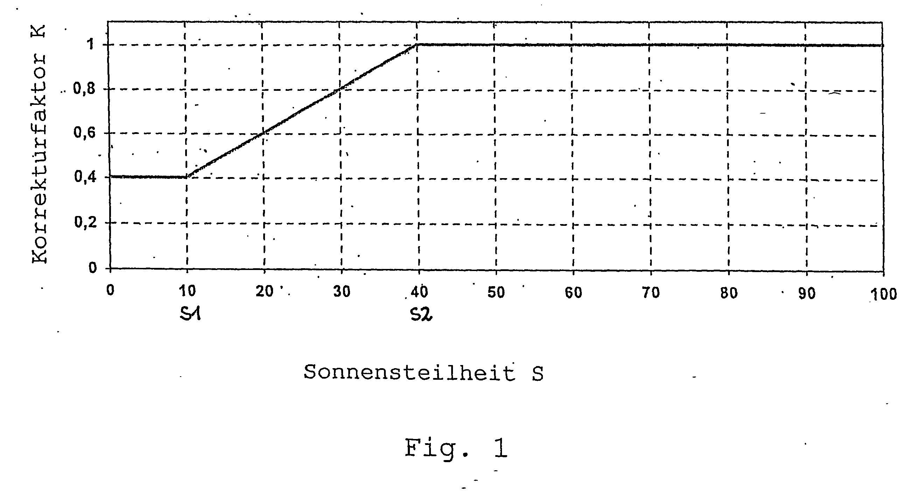

Fig. 1  eine Darstellung der erfindungsgemäß berechneten Sonnensteilheit und eines der jeweiligen Sonnensteilheit zugeordneten Faktor zur Veränderung der Klimaregelung.

Erfindungsgemäß wird durch Berechnung der verschiedenen Sonnenwerte der einzelnen Zonen die Steilheit der Sonne berechnet. Durch die Berechnung der Sonnensteilheit wird ermittelt, ob die Sonneneinstrahlung auf die Insassen wirkt oder nicht. Anhand der Sonnensteilheit wird ein entsprechender Korrekturfaktor ermittelt, mittels dessen eine sehr genaue Kompensation der Blaslufttemperatur bzw. der Gebläseanhebung durch die Sonneneinstrahlung möglich ist.

Im Folgenden wird nun das Verfahren zur Berechung der Sonnensteilheit genauer beschrieben. Hierbei erfolgt die Erläuterung am Beispiel einer Vier-Zonen-Klimaanlage, kann jedoch ebenso auf andere Mehr-Zonen-Klimaanlagen mit mehr oder weniger Zonen angewendet werden.

Zunächst wird die Sonneneinstrahlung in unterschiedlichen Raumwinkelbereichen unter Verwendung von vier Sensorelementen 1a bis 1d, beispielsweise eines Vierquadrantensensors erfasst. Die Sensorelemente sind dabei derart angeordnet, dass beispielsweise das erste Sensorelement 1a den Fahrzeugbereich vorne rechts, das zweite Sensorelement 1b den Fahrzeugbereich vorne links, das dritte Sensorelement 1c den Fahrzeugbereich hinten rechts und das vierte Sensorelement 1d den Fahrzeugbereich hinten links erfasst und entsprechenden Klimatisierungsbereichen im Fahrzeug zugeordnet sind.

Danach wird unter Berücksichtigung von Ausgangssignalen A1 bis A4 der ersten bis vierten Sensorelemente 1a bis 1d und eines über die vier Ausgangssignale A1 bis A4 gebildeten, vom, Sonnensensor ausgegebenen arithmetischen Mittelwerts $\overline{A}$ eine Sonnensteilheit S berechnet.

Diese Sonnensteilheit S kann beispielsweise gemäß der folgenden Formel berechnet werden:

$$S = ((|A2 - A3| + |A1 - A4|) / 2 * M / \overline{A},$$

wobei S die Sonnensteilheit, A2 das Ausgangssignal eines zweiten Sensorelements 1b (VL), A3 das Ausgangssignal eines dritten Sensorelements 1c (HR), A1 das Ausgangssignal eines ersten Sensorelements 1a (VR), A4 das Ausgangssignal eines vierten Sensorelements 1d (HL), M ein Multiplikator und $\overline{A}$ der arithmetische Mittelwert der Ausgangssignale A1 bis A4 der ersten bis vierten Sensorelemente ist.

Der Multiplikator M beträgt beispielsweise 50 und wird verwendet, um einen größeren und daher besser darstellbaren Wert zu erhalten. Die Formel zur Berechnung der Sonnensteilheit S ist derart gestaltet, dass S umso größer wird, je flacher die Sonne einstrahlt. Eine flacher einstrahlende Sonne mit einem großen Wert der Sonnensteilheit trifft mehr Fensterflächen und erfordert daher mehr Klimatisierung und daher eine stärkere Klimatisierung. Weiterhin ist es durch die erfindungsgemäße Berechnung der Sonnensteilheit möglich, die Fehlerwahrscheinlichkeit zu verringern, da die Sonnensteilheit bei flacherer Einstrahlung und dadurch bedingten geringeren Sensorausgangssignalen auch bei diffusem Licht, diesigem Wetter und/oder kurzem Sonneneinfluss größer wird und dadurch geringe Fehler keinen so großen Einfluss haben können.

Anschließend wird anhand der berechneten Sonnensteilheit S ein Korrekturfaktor K ermittelt, der auf die unter Verwendung der Sensorwerte herkömmlich unter Verwendung eines Vierquadrantensensors berechneten Klimaregelwerte, wie beispielsweise die Einblastemperatur und/oder die Gebläseleistung angewendet wird, wobei in der Regel die Einblastemperatur abgesenkt und die Gebläseleistung angehoben wird. In Fig. 1 ist der Verlauf eines derartigen Korrekturfaktors K in Bezug auf die mit der erfindungsgemäßen Formel berechnete Sonnensteilheit S gezeigt. Der Verlauf der Korrekturfaktors K ist hierbei fahrzeug- und designabhängig, da sich beispielsweise bei unterschiedlich großen Fensterflächen bzw. Neigungen der Fenster verschieden große Einflüsse auf die Insassen ergeben.

Aus Fig. 1 ist ersichtlich, dass unter einem ersten Schwellenwert S1 der Sonnensteilheit, beispielsweise 10, ein konstanter niedriger Korrekturfaktor, im Beispiel 0,4 verwendet wird, da hier eine Sonneneinstrahlung sehr steil von oben vorliegt, bei der geringfügige Änderungen jedoch zu keinen bemerkenswerten Änderungen beim Einfluss auf die Insassen führen. Daher werden zur Komfortverbesserung herkömmlich berechnete Klimatisierungsregelwerte mit dem Korrekturfaktor 0,4 multipliziert, um die Klimatisierungsveränderung aufgrund der Sonneneinstrahlung wesentlich zu vermindern, da augrund der hohen Steilheit kaum Einfluss auf die Insassen ausgeübt wird. Ebenso ist in einem Bereich oberhalb eines zweiten Schwellenwerts S2 der Sonnensteilheit, beispielsweise 40, der Korrekturfaktor wiederum konstant gewählt, da bei der dieser Sonnensteilheit zugrunde liegenden sehr flachen Sonneneinstrahlung nur geringfügige Änderungen im Einfallwinkel auftreten, die daher keine weitere Anpassung der Klimatisierungsregelung erfordern. Im Beispiel wird bei dieser sehr flachen Sonneneinstrahlung und daher großen Sonnensteilheit über dem zweiten Schwellenwert S2 der Korrekturfaktor K auf 1 gesetzt und die unter Verwendung der Werte des Vierquadrantensensors berechneten Klimaregelwerte unverändert verwendet. Im Bereich zwischen diesen beiden Schwellenwerten S1 und S2 kann beispielsweise ein linearer Korrekturfaktorverlauf verwendet werden, wie in Fig. 1 gezeigt.

Durch die erfindungsgemäße Ermittlung der Sonnensteilheit wird zudem ein nachteilige Einfluss von Kurvenfahrten auf die Klimaregelung vermieden.

Zusammenfassend offenbart die vorliegende Erfindung ein Verfahren zur sonneneinstrahlungsabhängigen Klimatisierung eines Fahrzeuginnenraums. Bei einem Fahrzeug mit beispielsweise einer Vier-Zonen-Klimaanlage wird die Sonneneinstrahlung mittels den verschiedenen Klimatisierungszonen im Fahrzeug zugeordneten Sensorelementen erfasst und für eine Regelung der Klimatisierungsleistung verwendet. Um eine Fehlregelung aufgrund erfasster Sonneneinstrahlung, die die Passagiere aufgrund von senkrechter Einstrahlung beispielsweise das Dach und die Motorhaube und den Kofferraumdeckel nicht oder nur wenig beeinflusst, wird mittels der Sensorelemente die Einstrahlungsrichtung ermittelt und die Regelung der Klimatisierungsleistung entsprechend angepasst, so dass der Fall einer zu intensiven Kühlung beispielsweise bei senkrechter Strahlung auf das Fahrzeugdach vermieden wird.

**Patentansprüche**

1. Verfahren zur sonneneinstrahlungsabhängigen Klimatisierung eines Fahrzeuginnenraums, mit den Schritten: Erfassen der Sonneneinstrahlung in unterschiedlichen Raumwinkelbereichen (VR, VL, HR, HL) mittels mehrerer Sensorelemente (1a bis 1d),
Ermitteln einer Klimatisierungsleistung von mindestens zwei in ihrer Klimatisierungsleistung einzeln steuerbaren Klimatisierungskanälen zur Klimatisierung unterschiedlicher Fahrzeuginnenraumbereiche, wobei die Klimatisierungsleistung eines Klimatisierungskanals zusätzlich zur Berücksichtigung einer Ist-Innenraumtemperatur ($T_{IIst}$), einer Soll-Innenraumtemperatur ($T_{ISoll}$), einer Außentemperatur ($T_A$) sowie optional einer Fahrzeuggeschwindigkeit (v) in Abhängigkeit von einem Ausgangssignal (A1 bis A4) eines diesem Klimatisierungskanal zugeordneten Sensorelements (1a bis 1d) oder einem mittelwertbereinigten Ausgangssignal eines diesem Klimatisierungskanal zugeordneten Sensorelements (1a bis 1d) ermittelt wird,
**gekennzeichnet durch** die weiteren Schritte
Berechnen einer Sonnensteilheit (S) gemäß der folgenden Formel

$$S = ((|A2 - A3| + |A1 - A4|) / 2 * M / \overline{A},$$

wobei S die Sonnensteilheit, A2 das Ausgangssignal eines zweiten Sensorelements 1b (VL), A3 das Ausgangssignal eines dritten Sensorelements 1c (HR), A1 das Ausgangssignal eines ersten Sensorelements 1a (VR), A4 das Ausgangssignal eines vierten Sensorelements 1d (HL), M ein Multiplikator und $\overline{A}$ der arithmetische Mittelwert der Ausgangssignale A1 bis A4 der ersten bis vierten Sensorelemente ist,
Ermitteln eines Korrekturfaktors (K) anhand der berechneten Sonnensteilheit,(S),
Ermitteln einer korrigierten Klimatisierungsleistung durch Multiplikation der ermittelten Klimatisierungsleistung mit dem Korrekturfaktor (K)
Einstellen der korrigierten Klimatisierungsleistung.

2. Verfahren zur sonneneinstrahlungsabhängigen Klimatisierung eines Fahrzeuginnenraums nach Anspruch 1, **dadurch gekennzeichnet, dass**
der Korrekturfaktor (K) in Abhängigkeit von der berechneten Sonnensteilheit (S) fahrzeugabhängig bei Messungen ermittelt wird.

3. Verfahren zur sonneneinstrahlungsabhängigen Klimatisierung eines Fahrzeuginnenraums nach Anspruch 1 oder 2, **dadurch gekennzeichnet, dass**
der Korrekturfaktor (K) unterhalb eines ersten Schwellenwerts der Sonnensteilheit (S1) und oberhalb eines zweiten Schwellenwerts der Sonnensteilheit (S2) konstant ist, wobei die Konstante oberhalb der zweiten Schwellenwerts größer als die Konstante unterhalb des ersten Schwellenwerts ist, und der Korrekturfaktor (K) zwischen den beiden Schwellenwerten (S1, S2) einen linearen Verlauf aufweist.

**4.** Verfahren zur sonneneinstrahlungsabhängigen Klimatisierung eines Fahrzeuginnenraums nach einem der Ansprüche 1 bis 3,
**dadurch gekennzeichnet,**
**dass**
beim Ermitteln der Klimatisierungsleistung aufgrund der Sonneneinstrahlung die Einblastemperatur ($T_{Einblas}$) abgesenkt und/oder die Gebläseleistung angehoben und diese Anhebung/Absenkung durch den Korrekturfaktor beibehalten oder verringert wird.

**5.** Verfahren zur sonneneinstrahlungsabhängigen Klimatisierung eines Fahrzeuginnenraums nach einem der Ansprüche 1 bis 4,
**dadurch gekennzeichnet,**
**dass**,
der Multiplikator (M) als 50 gewählt wird.

**Claims**

**1.** Method for the air conditioning of a vehicle interior as a function of incident solar radiation, with the steps:

detection of the incident solar radiation in different solid angle ranges (FR, FL, RR, RL) by means of a plurality of sensor elements (1a to 1d),
determination of an air conditioning capacity of at least two air conditioning ducts of individually controllable air conditioning capacity for the air conditioning of different vehicle interior regions, the air conditioning capacity of an air conditioning duct being determined, in addition to taking into account an actual interior temperature ($T_{Iact}$), a desired
interior temperature ($T_{Ides}$), an outside temperature ($T_A$) and, optionally, a vehicle speed (v), as a function of an output signal (A1 to A4) from a sensor element (1a to 1d) assigned to this air conditioning duct or of an averaged output signal from a sensor element (1a to 1d) assigned to this air conditioning duct,
**characterized by** the further steps:

calculation of a sunlight steepness (S) according to the following formula

$$S = ((|A2 - A3| + |A1 - A4|) / 2 * M / \overline{A},$$

S being the sunlight steepness, A2 the output signal from a second sensor element 1b (FL), A3 the output signal from a third sensor element 1c (RR), A1 the output signal from a first sensor element 1a (FR), A4 the output signal from a fourth sensor element 1d (RL), M a multiplier and $\overline{A}$ the arithmetic average value of the output signals A1 to A4 from the first to fourth sensor elements,
determination of a correction factor (K) with the aid of the calculated sunlight steepness (S),
determination of a corrected air conditioning capacity by the multiplication of the determined air conditioning capacity by the correction factor (K),
setting of the corrected air conditioning capacity.

**2.** Method for the air conditioning of a vehicle interior as a function of incidence of solar radiation according to Claim 1, **characterized in that** the correction factor (K) is determined as a function of the calculated sunlight steepness (S) in a vehicle-dependent manner during measurements.

**3.** Method for the air conditioning of a vehicle interior as a function of incident solar radiation according to Claim 1 or 2, **characterized in that** the correction factor (K) is constant below a first threshold value of the sunlight steepness (S1) and above a second threshold value of the sunlight steepness (S2), the constant above the second threshold value being higher than the constant below the first threshold value, and the correction factor (K) having a linear profile between the two threshold values (S1, S2).

**4.** Method for the air conditioning of a vehicle interior as a function of incident solar radiation according to one of Claims 1 to 3, **characterized in that**, during the determination of the air conditioning capacity on the basis of the incident solar radiation, the blow-in temperature ($T_{Blow-in}$) is lowered and/or the blower power is raised, and this raising/lowering is maintained or reduced by means of the correction factor.

**5.** Method for the air conditioning of a vehicle interior as a function of incident solar radiation according to one of Claims 1 to 4, **characterized in that** the selected multiplier (M) is 50.


**Revendications**

**1.** Procédé de climatisation de l'habitacle d'un véhicule en fonction de l'ensoleillement, comportant les étapes :

- détection du rayonnement solaire dans différentes zones angulaires de l'espace (VR, VL, HR, HL) au moyen de plusieurs capteurs (1a à 1d),
- détermination d'une puissance de climatisation d'au moins deux conduits de climatisation, pouvant être commandés séparément pour leur puissance de climatisation en vue de climatiser différentes zones de l'habitacle du véhicule, la puissance de climatisation d'un conduit de climatisation étant déterminée, en plus de la prise en compte d'une température d'habitacle réelle ($T_{list}$), d'une température d' habitacle de consigne ($T_{Isoll}$), d'une température extérieure ($T_A$), ainsi que, optionnellement, d'une vitesse du véhicule (v), en fonction d'un signal de sortie (A1 à A4) d'un capteur (1a à 1d) associé à ce conduit de climatisation ou d'un signal de sortie à moyenne corrigée d'un capteur (1a à 1d) associé à ce conduit de climatisation,

**caractérisé par** les étapes supplémentaires :

- calcul d'une déclivité solaire (S) selon la formule suivante :

$$S = ((|A2 - A3| + |A1 - A4|) / 2 * M / \overline{A},$$

dans laquelle S désigne la déclivité solaire, A2 le signal de sortie d'un deuxième capteur 1b (VL), A3 le signal de sortie d'un troisième capteur 1c (HR), A1 le signal de sortie d'un premier capteur 1a (VR), A4 le signal de sortie d'un quatrième capteur 1d (HL), M un multiplicateur et $\overline{A}$ la moyenne arithmétique des signaux de sortie A1 à A4 du premier au quatrième capteur,

- détermination d'un facteur de correction (K) à l'appui de la déclivité solaire (S) calculée,
- détermination d'une puissance de climatisation corrigée par la multiplication de la puissance de climatisation déterminée avec le facteur de correction (K),
- réglage de la puissance de climatisation corrigée.

**2.** Procédé de climatisation de l'habitacle d'un véhicule en fonction de l'ensoleillement selon la revendication 1, **caractérisé en ce que** le facteur de correction (K) en fonction de la déclivité solaire (S) calculée est déterminé, lors des mesures, en fonction du véhicule.

**3.** Procédé de climatisation de l'habitacle d'un véhicule en fonction de l'ensoleillement selon la revendication 1 ou 2, **caractérisé en ce que** le facteur de correction (K) est constant au-dessous d'une première valeur seuil de la déclivité solaire (S1) et au-dessus d'une deuxième valeur seuil de la déclivité solaire (S2), la constante au-dessus de la deuxième valeur seuil étant supérieure à la constante au-dessous de la première valeur seuil, et le facteur de correction (K) suivant un tracé linéaire entre les deux valeurs seuils (S1, S2).

**4.** Procédé de climatisation de l'habitacle d'un véhicule en fonction de l'ensoleillement selon l'une quelconque des revendications 1 à 3, **caractérisé en ce que**, lors de la détermination de la puissance de climatisation à l'appui de l'ensoleillement, la température d'insufflation ($T_{Einblas}$) est diminuée et/ou la puissance de la soufflerie est augmentée et cette diminution ou augmentation est maintenue ou diminuée par le facteur de correction.

**5.** Procédé de climatisation de l'habitacle d'un véhicule en fonction de l'ensoleillement selon l'une quelconque des revendications 1 à 4, **caractérisé en ce que** le multiplicateur (M) est choisi égal à 50.

EP 1 567 374 B1

Korrekturfaktor K

1

0,8

0,6

0,4

0,2

0

0    10   20   30   40   50   60   70   80   90   100

S1                S2

Sonnensteilheit S

Fig. 1